# EUROPEAN PATENT APPLICATION

(11) **EP 4 546 187 A1**
(43) Date of publication of application: **30.04.2025**
(21) Application number: 23830107.1
(22) Date of filing: 25.06.2023
(51) Int. Cl.: G06F 21/57

(54) **INTELLIGENT CONTRACT VULNERABILITY DETECTION METHOD AND APPARATUS, AND DEVICE**

(30) Priority: 27.06.2022 CN 202210736727
(71) Applicant: Digital Currency Institute, The People's Bank of China, Beijing 100071 (CN)
(72) Inventor: LIU, Ziqiang, Beijing 100071 (CN)
(74) Representative: Piticco, Lorena
(86) International application number: PCT/CN2023/102025
(87) International publication number: WO 2024/001929

(57) **Abstract**

An intelligent contract vulnerability detection method, which comprises: obtaining formalized deployment information of the intelligent contract, wherein the formalized deployment information comprises a formalized initial state and a formalized behavior list, and the formalized behavior list comprises an initialization execution function and a behavior function of the intelligent contract; executing an initialization execution function and a behavior function in the formalized behavior list on the basis of the formalized initial state to obtain an execution result of the intelligent contract; and evaluating the execution result of the intelligent contract according to a formalized specification library of the intelligent contract to obtain a vulnerability detection result, wherein the formalized specification library comprises formalized specifications of the intelligent contract. The present method relates to the technical field of block chains, and can improve the detection precision of vulnerability detection for smart contracts.

## Description

The present application claims priority to Chinese Patent Application No.202210736727.0, filed on June 27, 2022, which is incorporated herein by reference in its entirety.

### FIELD

The present disclosure relates to the technical field of blockchains, and in particular to a method and an apparatus for detecting a vulnerability in a smart contact, and an apparatus.

### BACKGROUND

The blockchain is a new-type application mode of the computer technology such as distributed data storage, point-to-point transmission, consensus mechanism, encryption algorithm and the like. The blockchain is a technology for maintaining a complete, distributed, and untamperable ledger database by using a decentralized consensus mechanism, enabling participators in the blockchain to achieve a unified ledger system without establishing a trust relationship. In the blockchain, a smart contract is written in a digital form. The smart contract is a set of commitments defined in a digital form, including a protocol based on which the contract participators can execute the commitments. The combination of the characteristics of the smart contract and the blockchain technology makes the entire process of storage, reading, and execution of the ledger system transparent, traceable, and untamperable. In addition, a state machine system is constructed by using the consensus algorithm provided in the blockchain, so that the smart contract operates efficiently.

### SUMMARY

In an aspect, a method for detecting a vulnerability in a smart contract is provided according to some embodiments of the present disclosure. The method is applied to a virtual machine server, and the method includes: obtaining formalized deployment information of the smart contract, where the formalized deployment information includes a formalized initial state and a formalized behavior list, and the formalized behavior list includes an initialization execution function and a behavior function of the smart contract; executing the initialization execution function and the behavior function included in the formalized behavior list based on the formalized initial state to obtain an execution result of the smart contract; and detecting the execution result of the smart contract based on a formalized specification library of the smart contract to obtain a vulnerability detection result, where the formalized specification library includes a formalized specification of the smart contract.

In some embodiments, the detecting the execution result of the smart contract based on a formalized specification library of the smart contract to obtain a vulnerability detection result includes: detecting, for each behavior function, whether the execution result obtained by executing the initialization execution function and the behavior function based on the formalized initial state conforms to the formalized specification; establishing a correlative relationship between the execution result and the formalized initial state and making the execution result as a new formalized initial state be included in the formalized deployment information in a case that the execution result is not included in the formalized deployment information, if it is detected that the execution result conforms to the formalized specification; and reporting an error message if it is detected that the execution result does not conform to the formalized specification.

In some embodiments, the method further includes: constructing a directed graph, where the directed graph includes a node corresponding to the formalized initial state, and any two nodes with a correlative relationship are connected via a directed edge. The establishing a correlative relationship between the execution result and the formalized initial state if it is detected that the execution result conforms to the formalized specification includes: determining whether a node corresponding to the execution result exists in the directed graph if it is detected that the execution result conforms to the formalized specification; setting a directed edge pointing from the initial state to the node if the node exists; and adding the execution result to the directed graph and setting a directed edge pointing from the initial state to a node corresponding to the execution result, if no node corresponding to the execution result exists in the directed graph.

In some embodiments, the formalized deployment information includes multiple formalized initial states, and the method further includes: determining an execution queue based on the multiple formalized initial states, where the execution queue includes a formalized initial state conforming to the formalized specification among the multiple formalized initial states. The executing the initialization execution function and the behavior function included in the formalized behavior list based on the formalized initial state includes: executing the initialization execution function and the behavior function included in the formalized behavior list based on each of the multiple formalized initial states in the execution queue.

In some embodiments, the method further includes: determining a customized formalized specification of the smart contract based on requirement information of the smart contract; and adding the customized formalized specification to the formalized specification library.

In some embodiments, the formalized specification library further includes a general specification, and the general specification represents the formalized specification for each smart contract of multiple smart contracts. After the adding the customized formalized specification to the formalized specification library, the method further includes: replacing the general specification with the customized formalized specification of the smart contract.

In some embodiments, the obtaining formalized deployment information of the smart contract includes: obtaining the smart contract; and analyzing the smart contract to obtain the formalized initial state and the formalized behavior list.

In some embodiments, the smart contract is stored in an electronic device, and the virtual machine server is communicatively connected to the electronic device. The obtaining the smart contract includes obtaining the smart contract from the electronic device.

In some embodiments, each of the multiple formalized initial states conforms to the formalized specification, or some of the multiple formalized initial states conform to the formalized specification.

In some embodiments, the virtual machine server is configured with a data repository, and after the obtaining the formalized deployment information of the smart contract, the method further includes: storing the formalized deployment information of the smart contract in the data repository.

In some embodiments, the initialization execution function initializes the virtual machine server.

In some embodiments, the behavior function represents a transaction rule for performing transaction between various accounts.

In another aspect, an apparatus for detecting a vulnerability in a smart contract is provided according to some embodiments of the present disclosure. The apparatus is applied to a virtual machine server, and the apparatus includes an obtaining module, an execution module and a detection module.

The obtaining module is configured to obtain formalized deployment information of the smart contract. The formalized deployment information includes a formalized initial state and a formalized behavior list, and the formalized behavior list includes an initialization execution function and a behavior function of the smart contract. The execution module is configured to execute the initialization execution function and the behavior function included in the formalized behavior list based on the formalized initial state to obtain an execution result of the smart contract. The detection module is configured to detect the execution result of the smart contract based on a formalized specification library of the smart contract to obtain a vulnerability detection result. The formalized specification library includes a formalized specification of the smart contract.

In another aspect, an electronic apparatus is provided according to some embodiments of the present disclosure. The electronic apparatus includes a memory, a processor, and a computer program stored on the memory and executable by the processor. The computer program, when being executed by the processor, implements the method for detecting the vulnerability in the smart contract described in the first aspect.

In another aspect, a computer-readable storage medium is provided according to some embodiments of the present disclosure. The computer-readable storage medium stores a computer program. The computer program, when being executed by a processor, implements the method for detecting the vulnerability in the smart contract described in the first aspect.

### BRIEF DESCRIPTION OF THE DRAWINGS

FIG. 1 is a schematic diagram of an application scenario of a method for detecting a vulnerability in a smart contract according to one or more embodiments;
FIG. 2 is a flowchart of a method for detecting a vulnerability in a smart contract according to one or more embodiments;
FIG. 3 is a schematic diagram of a formalized behavior list according to one or more embodiments;
FIG. 4 is a flowchart of a method for detecting a vulnerability in a smart contract according to another embodiment;
FIG. 5 is a schematic diagram of a directed graph according to one or more embodiments;
FIG. 6 is a schematic diagram of a directed graph according to another embodiment;
FIG. 7 is a flowchart a method for detecting a vulnerability in a smart contract according to another embodiment;
FIG. 8 is a flowchart of a method for detecting a vulnerability in a smart contract according to another embodiment;
FIG. 9 is a schematic structural diagram of an apparatus for detecting a vulnerability in a smart contract according to one or more embodiments; and
FIG. 10 is a schematic structural diagram of an electronic apparatus according to one or more embodiments.

### DETAILED DESCRIPTION

Features in various aspects and exemplary embodiments of the present disclosure are described in detail below. In order to make the faced technical problems, the adopted technical solutions and the advantages in the present disclosure more clearly, combined with the drawings and specific embodiments, further detailed descriptions are as follows. It should be understood that the embodiments described herein are for explaining the present disclosure instead of limiting the present disclosure. Those skilled in the art may implement the present disclosure without some specific details among the details. The following descriptions of the embodiments are merely intended to provide better understanding of the present disclosure by illustrating examples of the present disclosure.

It should be noted that the relational terms such as "first", "second" and the like in the present disclosure are used only to distinguish one entity or operation from another, and do not necessarily require or imply any such actual relationship or order between these entities or operations; and should not be construed as indicating or implying relative importance or indicating implicitly the quantity of the indicated technical features. Therefore, the feature defined by "first" and "second" may explicitly or implicitly include one or more features. In addition, in the description of the embodiments of the present disclosure, unless otherwise specified, "multiple" means two or more. Furthermore, the term "comprise", "include" or any other variation thereof is intended to cover a non-exclusive inclusion, so that a process, a method, an article, or a device comprising a set of elements includes not only those elements, but also other elements not expressly listed or elements inherent in such a process, method, article, or device. Unless expressively limited, the statement "including a..." does not exclude the case that other similar elements may exist in the process, the method, the article or the device other than enumerated elements.

In addition, the term "a" or "an" in the specification and/or claims means "at least one".

The method for detecting a vulnerability in a smart contact generally includes two kinds. In a first method, inherent operating rules of an existing vulnerability is extracted to be written into software, and vulnerability detection of the smart contact is performed using the software. A second method is implemented by manual detection, and the logic of the smart contract is manually checked to determine whether the vulnerability exists. However, the first method is mostly used to detect the discovered vulnerability, with limited detection ability and low detection precision. The second method is inefficient, and the detection precision is limited by the ability of the detection personnel.

In views of the above, the conventional method for detecting the vulnerability in the smart contact is of a low precision.

In order to solve the above technical problems, and it is considered that the smart contract adaptively changes the operation logic according to the operation rules of the virtual machine when operating in the virtual machine, may leading to unexpected vulnerabilities in the operating process, the virtual machine (or be referred to as a virtual machine server) is applied for detecting the vulnerability in the smart contract in some embodiments of the present disclosure.

In an embodiment, a method for detecting a vulnerability in a smart contract is provided. The method includes follows. The virtual machine first obtains formalized deployment information of the smart contract, executes an initialization execution function and a behavior function included in a formalized behavior list based on a formalized initial state included in the formalized deployment information, to obtain an execution result of the smart contract, and then detects the execution result of the smart contract based on a formalized specification library of the smart contract to obtain a vulnerability detection result. The vulnerability detection result indicates whether a vulnerability exists during the actual operation of the smart contract. Both a known vulnerability type and an unknown vulnerability type can be detected, so that the vulnerability detection precision for the smart contract is relatively high.

Furthermore, for each formalized initial state of the smart contract, the initialization execution function is executed to verify whether the execution results of all cases are compliant (such as whether the execution results conform the formalized specification), making the vulnerability detection result of the smart contract more complete, thereby improving detection precision.

In some embodiments of the present disclosure, the method for detecting the vulnerability in the smart contract applies a formalized verification method to the vulnerability detection for the smart contract. In the formalized verification method, the functional correctness and security properties of a system are verified by using mathematical formulas, theorems and systems. Compared with the conventional detection method, the inconsistency between the target and the system description can be found according to the formalized verification method. Therefore, the smart contract is verified by using the formalized verification method. In this way, the security of the smart contract is efficiently detected, and it is detected whether a vulnerability exists in the smart contract.

In some embodiments of the present disclosure, an execution subject of the method for detecting the vulnerability in the smart contract may be an electronic apparatus with a data processing capability such as a computer and a server deployed with virtual machine programs. The server may be a single server, or a server cluster formed by multiple servers. In some embodiments, the server cluster may also be a distributed cluster. Further, the execution subject of the method for detecting the vulnerability in the smart contract is not limited. The execution subject being a server deployed with a virtual machine is taken as an example for illustrating as follows.

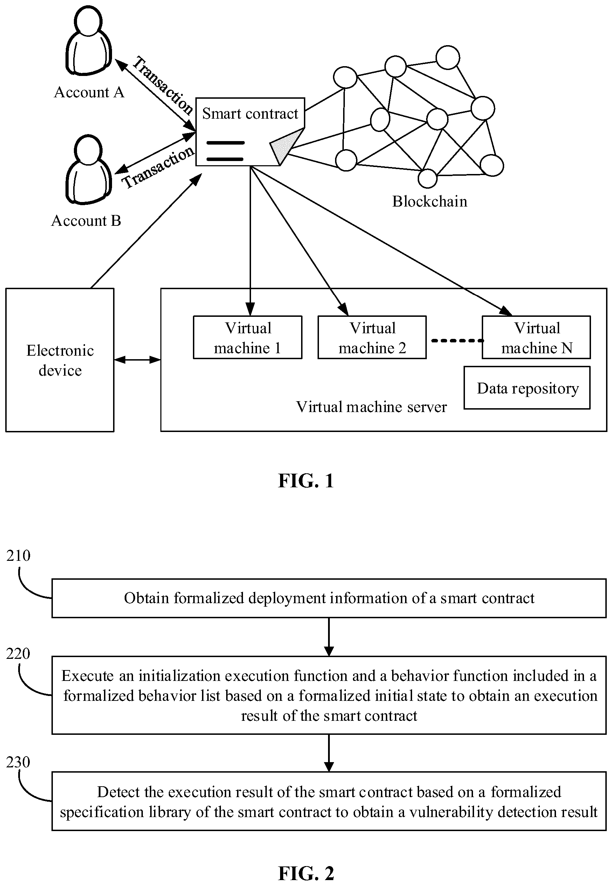

Reference is made to FIG. 1, which is a schematic diagram of an application scenario of a method for detecting a vulnerability in a smart contract according to one or more embodiments. As shown in FIG. 1, the execution subject of the method for detecting the vulnerability in the smart contract in some embodiments of the present disclosure may be a virtual machine server. The virtual machine server may be deployed with multiple virtual machines (or be referred to as a virtual machine cluster). The virtual machine cluster includes at least one virtual machine. The virtual machine can obtain source codes of the smart contract (or be referred to as a smart contract or smart contract codes). For example, the source codes of the smart contract may include a function (such as a transfer function) for implementing a transaction between account A and account B and transaction rules concluded between account A and account B.

The virtual machine may obtain the formalized deployment information of the smart contract, execute the initialization execution function and the behavior function included in the formalized behavior list based on the formalized initial state included in the formalized deployment information, to obtain the execution result of the smart contract, and detect the execution result of the smart contract based on the formalized specification library of the smart contract to obtain the vulnerability detection result. The vulnerability detection result indicates whether a vulnerability exists during the actual operation of the smart contract. Both a known vulnerability type and an unknown vulnerability type can be detected, so that the vulnerability detection precision for the smart contract is relatively high.

In some embodiments of the present disclosure, the execution subject of the method for detecting the vulnerability in the smart contract may be a virtual machine server. The smart contract directly operates on the virtual machine server without an exclusive language for the logical transformation of the smart contract, facilitating the vulnerability detection for the smart contract.

FIG. 2 shows a flowchart of a method for detecting a vulnerability in a smart contract according to an embodiment of the present disclosure. As shown in FIG. 2, the method is performed by a virtual machine (or be referred to as a virtual machine server), and the method includes the following steps 210 to 230.

In step 210, the formalized deployment information of the smart contract is obtained.

The formalized deployment information includes the formalized initial state and the formalized behavior list. The formalized behavior list includes the initialization execution function and the behavior function of the smart contract. The number of the initialization execution functions may be one, and the initialization execution function is used to initialize the virtual machine deployed with the smart contract based on the formalized initial state. The number of the behavior functions may be more than one. The behavior functions are used to execute respective functions of the smart contract in the initialized virtual machine.

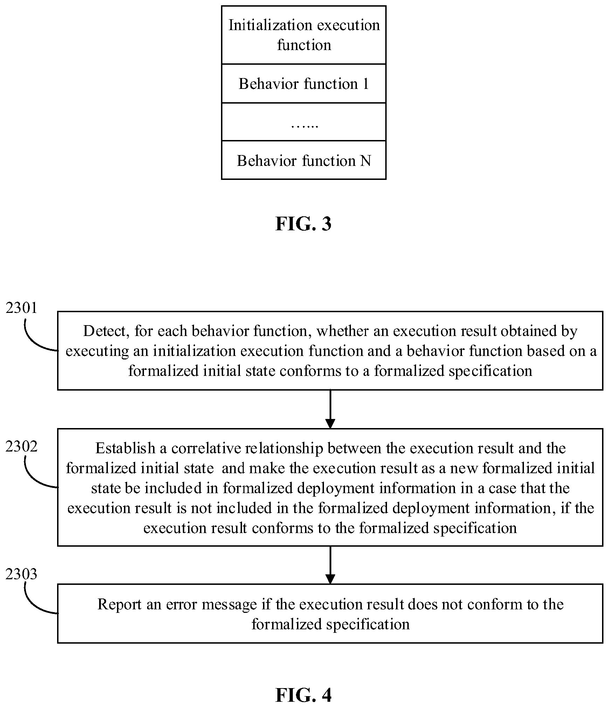

In some embodiments of the present disclosure, the formalized deployment information may be obtained by analyzing the codes of the smart contract. For example, the codes of the smart contract are inputted into a smart contract analyzer, and the smart contract analyzer analyzes the smart contract to obtain the formalized initial state and the formalized behavior list. For example, the smart contract analyzer determines a function list that can be externally called and a corresponding parameter list based on the function definition of the smart contract, and obtains the formalized initial state and the formalized behavior list. The initialization execution function and the behavior function in the formalized behavior list are used to deploy the smart contract in the virtual machine, thereby obtaining all the formalized deployment information. The formalized behavior list may be shown in FIG. 3.

In some embodiments, the formalized initial state may include: account A having 100 yuan, and account B having 0 yuan. The initialization execution function included in the formalized behavior list may be a payment function. The payment function has two parameters: a target account and a transfer amount. Moreover, the execution rule of the payment function is that the transfer amount is an integer, and the value of the transfer amount ranges from 0 to 255. For example, the formalized behavior list includes the following initialization execution function: A transferring 1 yuan to B, A transferring 100 yuan to B, A transferring 255 yuan to B, and the like.

In an embodiment, referring to FIG. 1, the virtual machine obtains the smart contract from the electronic device storing the smart contract in a communication connection manner, a physical connection manner and the like, and analyzes the smart contract via the smart contract analyzer to obtain the formalized deployment information. In another embodiment, the electronic device deployed with the smart contract analyzes the smart contract via the smart contract analyzer to obtain the formalized initial state and the formalized behavior list. The virtual machine obtains the formalized initial state and the formalized behavior list from the electronic device, and takes the obtained formalized initial state and the formalized behavior list as the formalized deployment information. Further, the virtual machine server shown in FIG. 1 may deploy the formalized deployment information in a local data repository, so as to obtain the formalized deployment information of the smart contract locally, thereby reducing the power consumption and processing complexity resulting from analyzing the smart contract by the virtual machine.

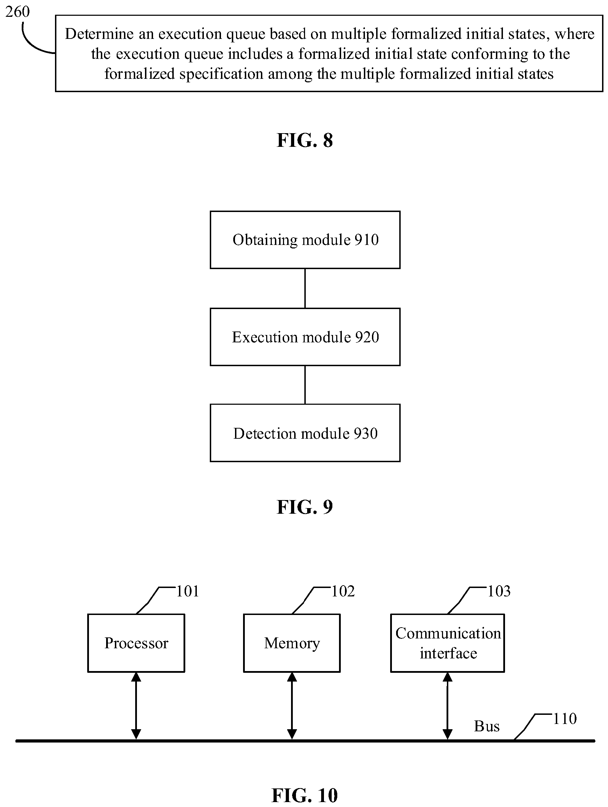

It should be noted that, in some embodiments of the present disclosure, the formalized initial state may be one or more, which is not limited. The formalized deployment information may include all formalized initial states obtained by analyzing the smart contract, may also include some formalized initial states of all formalized initial states obtained by analyzing the smart contract. For example, the formalized deployment information includes formalized initial states conforming to the formalized specifications among all the formalized initial states. That is, the compliant formalized initial states are screened out to implement the method according to some embodiments of the present disclosure. In some embodiments, the process of screening the compliant formalized initial states may be described in the embodiment corresponding to FIG. 8.

In step 220, the initialization execution function and the behavior function included in the formalized behavior list is executed based on the formalized initial state to obtain the execution result of the smart contract.

The execution result of the smart contract includes the execution result obtained by executing the initial execution function. Combined with the embodiment shown in step 210, the target account in the execution function is initialized.

For example, the execution result of the smart contract may be: account A having 90 yuan and account B having 10 yuan.

Further, in a case that the initialization execution function and the behavior function included in the formalized behavior list are executed based on the formalized initial state, the initialization execution function is first executed based on the formalized initial state to implement the initialization of the virtual machine, and then the behavior function is executed in the initialized virtual machine to obtain the execution result of the smart contract.

In step 230, the execution result of the smart contract is detected based on the formalized specification library of the smart contract to obtain the vulnerability detection result.

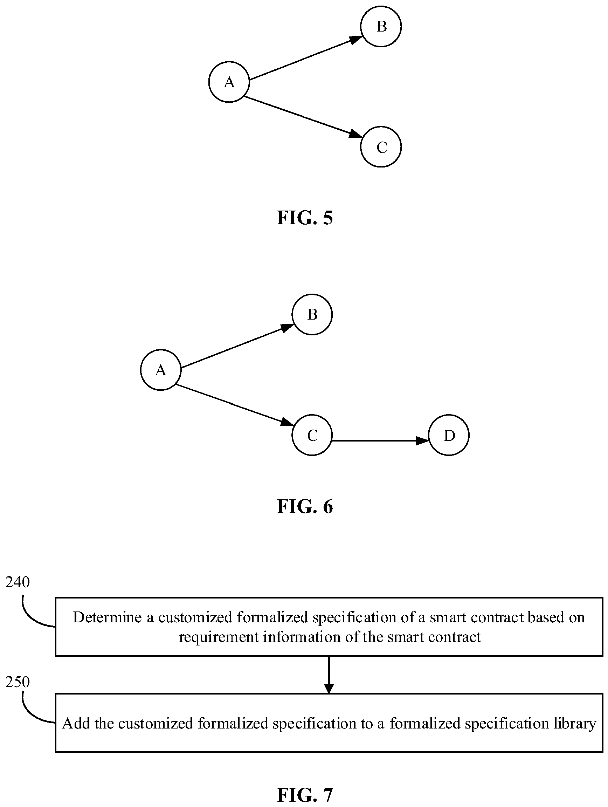

The formalized specification library includes a formalized specification of the smart contract. The formalized specification is used to describe the requirements that the state of the smart contract to meet, and includes a general specification and a customized formalized specification. The general specification refers to the requirements that all smart contracts need to meet. For example, the sum of balances of all accounts keep constant during the operation of the smart contract, the account balance cannot be a negative value, and the integral value range is determined. The customized formalized specification refers to the specification that the currently verified smart contract needs to conform. For example, the range that the integer values of the current smart contract falling within. For example, the implementation of the formalized specification library may be described in the embodiment corresponding to FIG. 7 below.

In some embodiments of the present disclosure, the priority of the customized formalized specification is higher than the priority of the general specification, and the customized formalized specification prevails for the same constraints. For example, if the customized formalized specification limits that the integer values range from 0 to 255, and the general specification limits that the integer values range from 0 to 1023, the range from 0 to 255 of the customized formalized specification is regarded as the standard in the formalized verification process.

In some embodiments of the present disclosure, formalized deployment information of the smart contract is first obtained, an initialization execution function and a behavior function included in the formalized behavior list are executed based on the formalized initial state included in the formalized deployment information to obtain an execution result of the smart contract, the execution result of the smart contract is detected based on a formalized specification library of the smart contract to obtain the vulnerability detection result. The vulnerability detection result indicates whether a vulnerability exists during the actual operation of the smart contract. Both a known vulnerability type and an unknown vulnerability type can be detected, so that the vulnerability detection precision for the smart contract is relatively high.

In some embodiments, as shown in FIG. 4, step 230, the detecting the execution result of the smart contract based on a formalized specification library of the smart contract to obtain a vulnerability detection result, may include the following steps 2301 to 2303.

In step 2301, for each behavior function, it is determined whether the execution result obtained by executing the initialization execution function and the behavior function based on the formalized initial state conforms to the formalized specification. Step 2302 is performed if it is detected that the execution result conforms to the formalized specification. Step 2303 is performed if it is detected that the execution result does not conform to the formalized specification.

It is determined whether the execution result conforms to the formalized specification by comparing the formalized specification with the execution result.

In some embodiments, the formalized initial state may include: account A having 100 yuan and account B having 0 yuan. The initialization execution function included in the formalized behavior list may be a payment function. The payment function has two parameters: the target account and the transfer amount. The execution rule of the payment function is that the transfer amount is an integer, and the value of the transfer amount ranges from 0 to 255. The formalized specification is that the total amount of the account is constant and equal to 100, and the account balance cannot be a negative value. The formalized specification is expressed as A+B=100∩A≥0∩B≥0.

In a case that a transfer function is executed, since the value of the transfer amount ranges from 0 to 255, the following is executed in turn: A transferring 0 yuan to B, A transferring 1 yuan to B,..., and A transferring 255 yuan to B. For each execution result of the transfer function, it is determined whether the execution result conforms to the formalized specification.

For example, the execution result is that account A has 10 yuan and account B has 100 yuan. In this case, A+B=110, which is greater than 100, so the execution result does not conform to the formalized specification.

In step 2302, a correlative relationship is established between the execution result and the formalized initial state, and an execution result is taken as a new formalized initial state to be included in the formalized deployment information in a case that the execution result is not included in the formalized deployment information.

In some embodiments of the present disclosure, the correlative relationship is established between the execution result and the formalized initial state for tracing the corresponding relationship between the function execution result and the formalized initial state. In a case that the execution result is not included in the formalized deployment information, the execution result is taken as a new formalized initial state to be included in the formalized deployment information, and the new formalized initial state is deployed to the virtual machine for the formalized specification verification. Therefore, the possibility that the formalized initial state covers various transaction situations during the operation of the smart contract is increased, so that the possible omissions in the detection process of the smart contract are reduced, and the detection precision for the smart contract is improved.

Further, in order to more visually trace the corresponding relationship between the function execution result and the formalized initial state, some embodiments of the present disclosure shows the correlative relationship between the execution result and the formalized initial state by means of a directed graph. In some embodiments, the process of showing by using the directed graph is as follows.

A directed graph is constructed before step 230 or step 210 is performed.

The constructing a directed graph may be implemented by constructing a directed graph based on the formalized initial state included in the formalized deployment information of the smart contract. The directed graph includes nodes corresponding to the formalized initial states, and any two nodes with a correlative relationship are connected via a directed edge.

Further, step 2302, the establishing a correlative relationship between the execution result and the formalized initial state may include: determining whether a node corresponding to the execution result exists in the directed graph; setting a directed edge pointing from the initial state to the node if the node exists; and adding the execution result to the directed graph and setting a directed edge pointing from the initial state to a node corresponding to the execution result if no node corresponding to the execution result exists in the directed graph.

In some embodiments, FIG. 5 is an initially constructed directed graph. As shown in FIG. 5, the directed graph includes three formalized initial states A, B and C. A and B are in a correlative relationship, A and C are in a correlative relationship, and B is not in correlation with C.

Referring the directed graph in FIG. 5, the execution result D in correlation with C is added to the directed graph to obtain a directed graph shown in FIG. 6.

In some embodiments of the present disclosure, the correlative relationship between the formalized initial state and the execution result may be expressed by the directed graph, facilitating visually showing the corresponding relationship between the execution result and the formalized initial state.

In step 2303, an error message is reported.

In some embodiments of the present disclosure, in a case that the execution result of the initialization execution function does not conform to the formalized specification, an error message is reported to alert the problem of the smart contract in time.

On the basis of the method shown in FIG. 4, the execution results of the respective formalized initial states executing in the initialization execution functions can be detected, a correlative relationship is established between the compliant execution results and the formalized initial states, and the compliant execution results are reported, facilitating tracing the corresponding relationship between the compliant function execution results and the formalized initial states, and alerting the non-compliant function execution results in the smart contract in time.

In some embodiments, in order to meet customized requirements, the formalized specification is customized to verify the smart contract. As shown in FIG. 7, before step 230 is performed, the method may further include steps 240 to 250.

In step 240, the customized formalized specification of the smart contract is determined based on the requirement information of the smart contract.

Different smart contracts have different requirements. The customized formalized specification of the smart contracts can be determined according to the requirement information of the smart contracts. For example, the smart contract formulates the transaction rule of account A and account B, and the requirement information of the smart contract is that the total amount of the accounts does not exceed 3000, so the customized formalized specification is determined: A+B < 3000.

Since formalized verification is performed on all possible cases, in order to reduce the time spent on the formalized verification, the general formalized specification is replaced with the customized formalized specification according to actual requirements in the actual operation process, thereby reducing the number of possible cases.

In step 250, the customized formalized specification is added to the formalized specification library, so as to obtain customized formalized specification from the formalized specification library and detect the execution result of the smart contract according to the customized formalized specification of the smart contract to obtain the vulnerability detection result during step 230.

The formalized specification library is a database used to store formalized specifications. In some embodiments of the present disclosure, the customized formalized specification is added to the formalized specification library, so as to directly invoke the formalized specification by means of the formalized specification library. In addition, the customized formalized specification in the formalized specification library can meet the customized requirements.

In some embodiments, in order to improve the execution efficiency, the formalized initial states in the formalized deployment information of the smart contract are screened to obtain the valid (or compliant) formalized initial states before step 220 is performed, so as to avoid the problem of low execution efficiency caused by processing the invalid formalized initial states. In some embodiments, the method is as shown in FIG. 8, the formalized deployment information includes multiple formalized initial states, and the method further includes step 260.

In step 260, an execution queue is determined based on the multiple formalized initial states. The execution queue includes the formalized initial states that conform to the formalized specification among the multiple formalized initial states.

The number of the formalized initial states may be more than one. The deployment sequence of the formalized initial states in the virtual machine is determined via the execution queue, avoiding omissions in the deployment of the initial state.

In some embodiments, step 220, the executing the initialization execution function and the behavior function included in the formalized behavior list based on the formalized initial state may include: executing the initialization execution function and the behavior function included in the formalized behavior list based on each of the formalized initial states in the execution queue.

In some embodiments of the present disclosure, each formalized initial state in the execution queue is traversed, and the initialization execution function and the behavior function in the formalized behavior list are executed accordingly, improving the possibility that the formalized initial state covers various transaction situations during the operation of the smart contract, thereby reducing the possible omissions in the detection process of the smart contract and improving the detection precision for the smart contract. Moreover, the formalized initial states in the execution queue conform to the formalized specification. The initialization execution function is only performed on the valid formalized initial states, avoiding the problem of low execution efficiency caused by processing the invalid formalized initial states.

In some embodiments, in order not to omit possible transaction situations and to improve the comprehensiveness of the detection of the smart contract, the method may further include: adding the execution result as a new formalized initial state to the execution queue in a case that no formalized initial state identical to the execution result exists in the execution queue.

In some embodiments of the present disclosure, the execution result is taken as a new formalized initial state to be added to the execution queue in a case that no formalized initial state identical to the execution result exists in the execution queue. The new formalized initial state is deployed to the virtual machine, and the formalized specification verification is performed on the execution result obtained by executing the initialization execution function based on the new formalized initial state. Therefore, the possibility that the formalized initial state covers various transaction situations during the operation of the smart contract is increased, so that the possible omissions in the detection process of the smart contract are reduced, and the detection precision for the smart contract is improved.

The above method is described in detail combined with the following examples.

An execution queue **Q** and a directed graph **G** are first constructed inside the virtual machine. The description of the execution queue in step 260 may be referred for the execution queue **Q,** and FIG. 5 and the description of the directed graph in step 2302 may be referred for the directed graph **G.** The above method is performed based on the execution queue **Q** and the directed graph **G.** The process of performing the method based on the execution queue **Q** and the directed graph **G** may include following steps 1 to 3.

In step 1, the formalized deployment information of the smart contract is obtained, and it is detected by the formalized detection tool whether the formalized initial states conform to the formalized specification. If the formalized initial state does not conform to the formalized specification, an error is reported directly. If the formalized initial state conforms to the formalized specification, step 2 is performed. That is, the formalized initial states included in the formalized deployment information are screened by step 1 to obtain the compliant formalized initial states, and the compliant formalized initial states are set into the execution queue **Q.**

In step 2, the formalized initial states conforming to the formalized specification are set into the execution queue **Q,** and the formalized initial states are taken as nodes to be added to the directed graph **G.** The number of the formalized initial states may be one or more than one.

In step 3, if the execution queue **Q** is not empty, the following steps (1) to (4) are performed.

In step (1), a first formalized initial state **s** in the execution queue **Q** pops up, and the initialization execution function is executed based on **s** to implement the initialization of the virtual machine.

In step (2), all the behavior functions in the formalized behavior list are executed, and the results of executing the respective behavior functions are putted into a set **Set.**

In step (3), if the **Set** is not empty, the following operations are performed on each element **t** in the Set:
detecting whether **t** conforms to the formalized specification, and reporting an error if **t** does not conform to the formalized specification; and
determining, if **t** conforms to the formalized specification, whether **t** already exists in the directed graph **G;** and
adding a directed edge pointing from **s** to **t** if **t** already exists in the directed graph **G;** and
adding **t** to the execution queue **Q,** adding **t** to the directed graph and adding a directed edge pointing from **s** to **t** in the directed graph, if **t** does not exist in the directed graph **G;**
and then the element **t** is removed from the **Set** after performing the above operations.

In step (4), if the **Set** is empty, a next formalized initial state in the execution queue **Q** is executed, the above steps (1) to (4) are repeatedly performed. In a case that all possible cases (that is, all formalized initial states in the execution queue) are executed, the execution queue **Q** is empty and the process ends.

In some embodiments of the present disclosure, the formalized initial states included in the execution queue are traversed, such that vulnerability detection is performed on the respective formalized initial states. In a case that the execution result is not included in the formalized deployment information, the execution result is taken as a new formalized initial state to be included in the formalized deployment information, and the new formalized initial state may be deployed to the virtual machine for performing the formalized specification verification. Therefore, the possibility that the formalized initial state covers various transaction situations during the operation of the smart contract is increased, so that the possible omissions in the detection process of the smart contract are reduced, and the detection precision for the smart contract is improved.

The method for detecting the vulnerability in the smart contract is described in FIG. 1 to FIG. 8, and the apparatus provided in some embodiments of the present disclosure is described combined with FIG. 9 and FIG. 10. In order to achieve the above functions, the apparatus for detecting the vulnerability in the smart contract includes hardware architectures and/or software modules to implement the respective functions. Those skilled in the art should easily realize that the method for detecting the vulnerability in the smart contract can be implemented in the form of hardware or a combination of hardware and computer software combined with the algorithmic steps of the various examples described in the embodiments provided herein. Whether a function is to be performed by hardware or by hardware driven by computer software depends on a specific application and design constraints of the technical solution. Those skilled in the art can use different methods to implement the described functions for each particular application, but it is not to be considered that the implementation goes beyond the scope of the embodiments of the present disclosure.

Some embodiments of the present disclosure can perform division on the functional modules of the apparatus for detecting the vulnerability in the smart contract by example according to the above method. The respective functional modules of the apparatus for detecting the vulnerability in the smart contract may be divided according to the respective functions, or two or more functions may be integrated in a processing module. The integrated module may be implemented in a form of hardware, or may be implemented in a form of software functional module. It should be noted that the division of modules in some embodiments of the present disclosure is schematic, which is only a logical function division, and the division may be in other forms in actual implementation.

FIG. 9 shows a schematic structural diagram of an apparatus for detecting a vulnerability in a smart contract according to one or more embodiments. The modules of the apparatus shown in FIG. 9 have the functions of implementing the respective steps in FIG. 2 and can achieve the corresponding technical effects. As shown in FIG. 9, the apparatus may include an obtaining module 910, an execution module 920 and a detection module 930. The obtaining module 910 is configured to obtain formalized deployment information of the smart contract. The formalized deployment information includes a formalized initial state and a formalized behavior list. The formalized behavior list includes an initialization execution function and a behavior function of the smart contract. The execution module 920 is configured to execute the initialization execution function and the behavior function included in the formalized behavior list based on the formalized initial state to obtain an execution result of the smart contract. The execution result of the smart contract includes the execution result obtained by executing the initial execution function. The detection module 930 is configured to detect the execution result of the smart contract based on a formalized specification library of the smart contract to obtain a vulnerability detection result. The formalized specification library includes a formalized specification of the smart contract.

In some embodiments of the present disclosure, the formalized deployment information of the smart contract is first obtained, an initialization execution function and a behavior function included in the formalized behavior list are executed based on the formalized initial state included in the formalized deployment information to obtain an execution result of the smart contract, the execution result of the smart contract is detected based on a formalized specification library of the smart contract to obtain the vulnerability detection result. The vulnerability detection result indicates whether a vulnerability exists during the actual operation of the smart contract. Both a known vulnerability type and an unknown vulnerability type can be detected, so that the vulnerability detection precision for the smart contract is relatively high.

In some embodiments, the detection module 930 is configured to detect, for each behavior function, whether the execution result obtained by executing the initialization execution function and the behavior function based on the formalized initial state conforms to the formalized specification; establish a correlative relationship between the execution result and the formalized initial state, and make the execution result as a new formalized initial state be included in the formalized deployment information in a case that the execution result is not included in the formalized deployment information, if the execution result conforms to the formalized specifications; and report an error message if the execution result does not conform to the formalized specification.

In some embodiments, the apparatus further includes a construction module. The construction module is configured to construct a directed graph. The directed graph includes nodes corresponding to the formalized initial states, and any two nodes with a correlative relationship are connected via a directed edge. The detection module 930 is configured to: determine, if the execution result conforms to the formalized specification, whether a node corresponding to the execution result exists in the directed graph; set a directed edge pointing from the initial state to the node if the node exists; and add the execution result to the directed graph and set a directed edge pointing from the initial state to a node corresponding to the execution result if no node corresponding to the execution result exists in the directed graph.

In some embodiments, the formalized deployment information includes multiple formalized initial states. The apparatus further includes a determination module. The determination module is configured to determine an execution queue based on the multiple formalized initial states. The execution queue includes the formalized initial states conforming to the formalized specification among the multiple formalized initial states. The execution module 920 is configured to execute the initialization execution function and the behavior function included in the formalized behavior list based on each of the formalized initial states in the execution queue.

In some embodiments, the apparatus further includes a determination module and an adding module. The determination module is configured to determine a customized formalized specification of the smart contract based on requirement information of the smart contract. The adding module is configured to add the customized formalized specification to the formalized specification library.

In some embodiments, the formalized specification library further includes a general specification, the general specification represents the formalized specification for each smart contract among the multiple smart contracts. The apparatus further includes a replacement module. The replacement module is configured to replace the general specification with the customized formalized specification of the smart contract.

In some embodiments, the obtaining module is configured to obtain the smart contract, and analyze the smart contract to obtain the formalized initial state and the formalized behavior list.

In some embodiments, the smart contract is stored in an electronic device, and the virtual machine server is communicatively connected to the electronic device. The obtaining module is configured to obtain the smart contract from the electronic device.

In some embodiments, each of the multiple formalized initial states conforms to the formalized specification, or some of the multiple formalized initial states conform to the formalized specification.

In some embodiments, the virtual machine server is configured with a data repository. In addition to obtaining the formalized deployment information of the smart contract, the apparatus further includes a storage module. The storage module is configured to store the formalized deployment information of the smart contract in the data repository.

In some embodiments, the initialization execution function initializes the virtual machine server.

In some embodiments, the behavior function represents transaction rules for transaction between different accounts.

In some embodiments of the present disclosure, formalized deployment information of the smart contract is first obtained, an initialization execution function and a behavior function included in the formalized behavior list are executed based on the formalized initial state included in the formalized deployment information to obtain an execution result of the smart contract, the execution result of the smart contract is detected based on a formalized specification library of the smart contract to obtain a vulnerability detection result. The vulnerability detection result indicates whether a vulnerability exists during the actual operation of the smart contract. Both a known vulnerability type and an unknown vulnerability type can be detected, so that the vulnerability detection precision for the smart contract is relatively high.

FIG. 10 shows a schematic structural diagram of an electronic apparatus according to one or more embodiments. As shown in FIG. 10, the apparatus may include a processor 101 and a memory 102 storing computer program instructions.

For example, the processor 101 may include a central processing unit (CPU), or an application specific integrated circuit (ASIC), or may be configured as one or more integrated circuits for implementing some embodiments of the present disclosure.

The memory 102 may include a mass memory for data or instructions. The memory 102 may include but is not limited to: a hard disk drive (HDD), a floppy disk drive, a flash memory, an optical disk, a magneto-optic disk, a tape, a universal serial bus (USB) drive, or a combination of two or more of the above. In an embodiment, the memory 102 may include a removable or non-removable (or fixed) medium, or the memory 102 is non-volatile solid-state memory. The memory 102 may be inside or outside the integrated gateway disaster recovery device.

In an embodiment, the memory 102 may be a read only memory (ROM). In an embodiment, the ROM may be a mask-programmed ROM, a programmable ROM (PROM), an erasable PROM (EPROM), an electrically erasable PROM (EEPROM), an electrically alterable ROM (EAROM), a flash memory, or a combination of two or more of the above.

The processor 101 is configured to read and execute the computer program instructions stored in the memory 102, so as to implement the method in the embodiment shown in FIG. 2 and achieve the corresponding technical effect by executing the method in the embodiment shown in FIG. 2, which is not described herein for conciseness.

In an embodiment, the electronic apparatus may further include a communication interface 103 and a bus 110. As shown in FIG. 10, the processor 101, the memory 102, and the communication interface 103 are connected to each other via the bus 110 and implement communication with each other.

The communication interface 103 is mainly used to implement communications between modules, apparatuses, units and/or devices in the embodiments of the present disclosure.

The bus 110 may include hardware, software, or both the hardware and the software, coupling the components of an online data traffic billing device to each other. For the sake of illustration, not for limitation, the bus may include an accelerated graphics port (AGP) or other graphics buses, an extended industry standard architecture (EISA) bus, a front side bus (FSB), a hyper transport (HT) interconnection, an industry standard architecture (ISA) bus, a wireless bandwidth interconnection, a low pin count (LPC) bus, a memory bus, a micro channel architecture (MCA) bus, a peripheral component interconnect (PCI) bus, a PCI-Express (PCI-X) bus, a serial advanced technology attachment (SATA) bus, a video electronics standards association local bus (VLB), other appropriate buses, or a combination of two or more of the above. The bus 110 may include one or more buses, where appropriate. Although some embodiments of the present disclosure describe and indicate specific bus, substitution for any suitable bus or interconnection may be considered.

The electronic apparatus performs the method for detecting the vulnerability in the smart contract in some embodiments of the present disclosure to achieve the corresponding technical effect of the method for detecting the vulnerability in the smart contract described in FIG. 2.

In addition, combined with the method for detecting the vulnerability in the smart contract in the above embodiments, in some embodiments of the present disclosure, a computer readable storage medium (such as a non-transient computer readable storage medium) is provided. The computer readable storage medium stores computer program instructions. The computer program instructions, when being executed by the processor, implements the method for detecting the vulnerability in the smart contract according to any one of the embodiments described above.

The computer readable storage medium may include but is not limited to: a hard disk drive (HDD), a floppy disk drive, a flash memory, an optical disk, a magneto-optic disk, a tape, a universal serial bus (USB) drive, or a combination of two or more of the above. In an embodiment, the computer readable storage medium may include a removable or non-removable (or fixed) medium, or the computer readable storage medium is non-volatile solid-state memory. The computer readable storage medium may be inside or outside the integrated gateway disaster recovery device.

In an embodiment, a computer program product is provided according to some embodiments of the present disclosure. The computer program product, when executing on a computer, causes the computer to perform the method for detecting the vulnerability in the smart contract according to the above embodiments.

Those skilled in the art can clearly understand from the above implementations that, for convenience and conciseness of description, the division of functional units and modules is described as an example. In actual applications, the functions may be allocated to different functional modules as required. That is, the internal structure of the apparatus is divided into different functional modules, to implement all or part of the functions described above.

In some embodiments of the present disclosure, it should be understood that the disclosed apparatus and method may be implemented in other manners. For example, the embodiments of the apparatus described above are only illustrative. For example, the division of the modules or units is only a logical function division, and there may be other division manners in actual implementation. For example, multiple units or components may be combined or integrated into another apparatus, or some features may be omitted or not implemented. In addition, the mutual coupling or direct coupling or communication connection shown or discussed above may be indirect coupling or communication connection via some interfaces, apparatuses or units, and may be electrical, mechanical or in other forms.

The units described as separation parts may be or may not be physically separated. The part shown as a unit may be or may not be a physical unit. That is, the units may be arranged at a same place, or may be distributed to multiple places. Some or all of the units may be selected according to actual requirements to implement the embodiments of the present disclosure.

In addition, the functional units in the various embodiments according to the present disclosure may be integrated into one processing unit, or the units may separate physically, or two or more units may be integrated into one unit. The integrated unit may be implemented in a form of hardware, or in a form of a software function unit.

In a case that the integrated unit is implemented in the form of a software functional unit and functions as an independent product for sale or use, the integrated unit may also be stored in a readable storage medium. Based on the understanding, the technical solutions of some embodiments of the present disclosure, or the whole or part of the technical solutions may be embodied essentially in the form of a software product. The software product is stored in a storage medium, including instructions for causing a device (may be a single chip microcomputer, a chip and the like) or a processor to perform all or part of the steps of the method described in the embodiments of the present disclosure. The above-mentioned storage medium includes a U disk, a removable hard disk, a ROM, a RAM, a magnetic disk, an optical disk, or other medium that can store program codes.

The above are only specific implementations of the embodiments according to the present disclosure, but the protection scope of the present disclosure is not limited thereto. Modifications and substitutions within the technical scope disclosed in the present disclosure shall fall within the protection scope of the present disclosure. Therefore, the protection scope of the present disclosure is defined by the claims.

## Claims

1. A method for detecting a vulnerability in a smart contract, applied to a virtual machine server, comprising:
obtaining formalized deployment information of the smart contract, wherein the formalized deployment information comprises a formalized initial state and a formalized behavior list, and the formalized behavior list comprises an initialization execution function and a behavior function of the smart contract;
executing the initialization execution function and the behavior function comprised in the formalized behavior list based on the formalized initial state to obtain an execution result of the smart contract; and
detecting the execution result of the smart contract based on a formalized specification library of the smart contract to obtain a vulnerability detection result, wherein the formalized specification library comprises a formalized specification of the smart contract.

2. The method according to claim 1, wherein the detecting the execution result of the smart contract based on a formalized specification library of the smart contract to obtain a vulnerability detection result comprises:
detecting, for each behavior function, whether the execution result obtained by executing the initialization execution function and the behavior function based on the formalized initial state conforms to the formalized specification;
establishing a correlative relationship between the execution result and the formalized initial state, and making the execution result as a new formalized initial state be comprised in the formalized deployment information in a case that the execution result is not comprised in the formalized deployment information, if it is detected that the execution result conforms to the formalized specification; and
reporting an error message if it is detected that the execution result does not conform to the formalized specification.

3. The method according to claim 2, further comprising:
constructing a directed graph, wherein the directed graph comprises a node corresponding to the formalized initial state, and any two nodes with a correlative relationship are connected via a directed edge, and wherein
the establishing a correlative relationship between the execution result and the formalized initial state if it is detected that the execution result conforms to the formalized specification comprises:
determining whether a node corresponding to the execution result exists in the directed graph if it is detected that the execution result conforms to the formalized specification;
setting a directed edge pointing from the initial state to the node if the node exists; and
adding the execution result to the directed graph and setting a directed edge pointing from the initial state to a node corresponding to the execution result, if no node corresponding to the execution result.

4. The method according to any one of claims 1 to 3, wherein the formalized deployment information comprises a plurality of formalized initial states, and the method further comprises:
determining an execution queue based on the plurality of formalized initial states, wherein the execution queue comprises a formalized initial state conforming to the formalized specification among the plurality of formalized initial states; wherein
the executing the initialization execution function and the behavior function comprised in the formalized behavior list based on the formalized initial state comprises:
executing the initialization execution function and the behavior function comprised in the formalized behavior list based on each of the plurality of formalized initial states in the execution queue.

5. The method according to claim 1, further comprising:
determining a customized formalized specification of the smart contract based on requirement information of the smart contract; and
adding the customized formalized specification to the formalized specification library.

6. The method according to claim 5, wherein the formalized specification library further comprises a general specification, the general specification represents the formalized specification for each smart contract of a plurality of smart contracts, and after the adding the customized formalized specification to the formalized specification library, the method further comprises:
replacing the general specification with the customized formalized specification of the smart contract.

7. The method according to claim 1, wherein the obtaining formalized deployment information of the smart contract comprises:
obtaining the smart contract; and
analyzing the smart contract to obtain the formalized initial state and the formalized behavior list.

8. The method according to claim 7, wherein the smart contract is stored in an electronic device, the virtual machine server is communicatively connected to the electronic device, and the obtaining the smart contract comprises:
obtaining the smart contract from the electronic device.

9. The method according to claim 4, wherein each of the plurality of formalized initial states conforms to the formalized specification, or some of the plurality of formalized initial states conform to the formalized specification.

10. The method according to claim 1, wherein the virtual machine server is configured with a data repository, and after the obtaining the formalized deployment information of the smart contract, the method further comprises:
storing the formalized deployment information of the smart contract in the data repository.

11. The method according to claim 1, wherein the initialization execution function initializes the virtual machine server.

12. The method according to claim 1, wherein the behavior function represents a transaction rule for performing transaction between various accounts.

13. An apparatus for detecting a vulnerability in a smart contract, applied to a virtual machine server, wherein the apparatus comprises:
an obtaining module, configured to obtain formalized deployment information of the smart contract, wherein the formalized deployment information comprises a formalized initial state and a formalized behavior list, and the formalized behavior list comprises an initialization execution function and a behavior function of the smart contract;
an execution module, configured to execute the initialization execution function and the behavior function comprised in the formalized behavior list based on the formalized initial state to obtain an execution result of the smart contract; and
a detection module, configured to detect the execution result of the smart contract based on a formalized specification library of the smart contract to obtain a vulnerability detection result, wherein the formalized specification library comprises a formalized specification of the smart contract.

14. An electronic apparatus, comprising a memory, a processor, and a computer program stored on the memory and executable by the processor, wherein
the computer program, when being executed by the processor, implements the method for detecting the vulnerability in the smart contract according to any one of claims 1 to 12.

15. A computer-readable storage medium, storing a computer program, wherein
the computer program, when being executed by a processor, implements the method for detecting the vulnerability in the smart contract according to any one of claims 1 to 12.
